# EUROPÄISCHE PATENTSCHRIFT

(11) **EP 0 841 242 B1**
(45) Veröffentlichungstag und Bekanntmachung des Hinweises auf die Patenterteilung: **04.07.2001**
(21) Anmeldenummer: 97119027.7
(22) Anmeldetag: 31.10.1997
(51) Int. Cl.: B62D 25/14

(54) **Traganordnung für eine Lenkwelle eines Kraftfahrzeuges**
Support device for the steering shaft of a motor vehicle
Dispositif de support pour la colonne de direction d'un véhicule automobile

(30) Priorität: 07.11.1996 DE 19645895
(43) Veröffentlichungstag der Anmeldung: 13.05.1998
(73) Patentinhaber: Micro Compact Car smart GmbH, 71272 Renningen (DE)
(72) Erfinder: Ganser, Martin, 71263 Weil der Stadt (DE); Fischer, Thomas, 75365 Calw (DE); Henseler, Wolfgang, 71083 Herrenberg (DE); Schick, Ulrich, 72202 Nagold-Vollmaringen (DE)
(74) Vertreter: Weiss, Klaus

(56) Entgegenhaltungen:
- EP-A- 0 266 255
- EP-A- 0 431 986
- EP-A- 0 456 531
- DE-A- 2 313 115
- FR-A- 2 726 520
- US-A- 5 445 407

## Beschreibung

Die Erfindung betrifft eine Traganordnung für eine Lenkwelle eines Kraftfahrzeugs nach dem Oberbegriff des Patentanspruchs 1.

Eine solche, der gattungsbildenden EP 0 266 255 A1 entnehmbare und in einem Cockpitbereich angeordnete Traganordnung umfaßt eine Trägerkonsole, die als Lagerung für die Lenkwelle zwei zueinander beabstandete und koaxial ausgerichtete Lagerringe aufweist. Die Trägerkonsole ist dabei über Schraubverbindungen an einem unterhalb der Windschutzscheibe verlaufenden Querträger sowie an einem oberhalb des Pedalbodens angeordneten Querträger an der Karosseriestruktur festgelegt.

Nachteilig bei dieser bekannten Traganordnung ist es, daß die Montage der Trägerkonsole relativ aufwendig und dadurch kostenintensiv ist. Zudem benötigt diese bekannte Trägerkonsole durch deren Festlegung am unterhalb der Windschutzscheibe verlaufenden Querträger sowie am oberhalb des Pedalbodens angeordneten Querträger einen großen Bauraum.

Aus der US 5 445 407 ist ein Schalttafelquerträger beschrieben, der neben der Aufnahme für eine Lenksäulenbefestigung einen Aufnahmeabschnitt für die Integration eines Airbags aufweist.

Schließlich ist aus der DE-OS 30 04 797 eine Traganordnung bekannt, die eine Trägerkonsole für ein Mantelrohr einer Lenkungsanlage eines Kraftfahrzeugs aufweist, wobei in dem Mantelrohr eine Lenkwelle drehbar gelagert ist. Das Mantelrohr ist an einer Trägerkonsole befestigt, die mittels eines Tragarmes an einer seitlichen A-Säule der Karosserietragstruktur festgelegt ist.

Aufgabe der Erfindung ist es, eine Traganordnung der eingangs genannten Art zu schaffen, die mit einfachen Mitteln sowohl eine sichere Lagerung der Lenkwelle als auch die kompakte Anordnung weiterer Fahrzeugfunktionseinrichtungen im Cockpitbereich ermöglicht.

Diese Aufgabe wird erfindungsgemäß durch eine Traganordnung mit den Merkmalen des Patentanspruchs 1 gelöst. Vorteilhafte Ausführungsformen mit zweckmäßigen Weiterbildungen der Erfindung sind in den Unteransprüchen angegeben.

Bei der Traganordnung nach der Erfindung weist die Trägerkonsole einen Auflageabschnitt für die Verbindung mit einem Cockpitquerträger auf. Dadurch wird eine besonders stabile Halterung der Trägerkonsole an der Karosserietragstruktur erreicht. Das Vorsehen von wenigstens einem weiteren Aufnahmeabschnitt ermöglicht die kompakte Anordnung weiterer Fahrzeugfunktionselemente wie Bedienelemente, elektrotechnische oder elektronische Bauteile, Bauteile für Innenraumkomforteinrichtungen wie Heizungs- oder Klimaanlagen oder Bauteile von sicherheitstechnischen Fahrzeugfunktionseinrichtungen wie Airbag-Einheiten. Als Lagerung für die Lenkwelle sind zwei zueinander beabstandete und koaxial ausgerichtete Lagerringe/Lagerhalbschalen an der Trägerkonsole vorgesehen.

In weiterer Ausgestaltung der Erfindung ist an wenigstens einer Seite der Trägerkonsole ein deformationssteifer Querträgerfortsatz angeformt, dessen freies Stirnende an einer Karosseriesäule, insbesondere an einer A-Säule, der Karosserietragstruktur festlegbar ist.

In weiterer Ausgestaltung der Erfindung weist die Trägerkonsole zu gegenüberliegenden Seiten abragende und an den gegenüberliegenden A-Säulen der Karosserietragstruktur befestigbare Querträgerfortsätze auf. Dadurch bildet die Trägerkonsole neben der Lagerungsfunktion für die Lenkwelle der Lenkungsanlage gleichzeitig auch einen Cockpitquerträger, mit dem die verschiedenen Cockpitbauteile verbindbar sind. Dadurch wird eine stabile Anordnung der Trägerkonsole zur Fahrzeugseite hin geschaffen, die die Deformationssteifigkeit der gesamten Karosserietragstruktur im Hinblick auf Seitenaufprallbelastungen erhöht. Es ist insbesondere möglich, das gesamte Cockpit einschließlich der Lenkungsanlage auf der solchermaßen gestalteten Trägerkonsole vorzumontieren und die gesamte vormontierte Baueinheit anschließend ins Fahrzeug einzusetzen.

In weiterer Ausgestaltung der Erfindung ist wenigstens ein Ablagefach für den Fahrzeuginnenraum in der Trägerkonsole integriert. Dadurch wird die Funktionsvielfalt der Trägerkonsole weiter erhöht.

In weiterer Ausgestaltung der Erfindung ist in einem Querträgerfortsatz ein Aufnahmegehäuse für die Aufnahme einer Airbageinheit vorgesehen. Dadurch ist es möglich, die gesamte Airbageinheit an der Trägerkonsole vorzumontieren.

Weitere Vorteile und Merkmale der Erfindung ergeben sich aus den Unteransprüchen sowie aus der nachfolgenden Beschreibung von bevorzugten Ausführungsbeispielen der Erfindung, die anhand der Zeichnungen dargestellt sind.
- Fig. 1: zeigt eine erste Ausführungsform einer erfindungsgemäßen Traganordnung mit einer auf einem Cockpitquerträger aufliegenden Trägerkonsole, die zur Lagerung einer Lenkwelle einer Lenkungsanlage des Kraftfahrzeugs vorgesehen ist,
- Fig. 2: eine Draufsicht auf eine weitere Ausführungsform einer erfindungsgemäßen Trägerkonsole,
- Fig. 3: eine Seitenansicht der Trägerkonsole nach Fig. 2 in Pfeilrichtung III in Fig. 2,
- Fig. 4: eine schematische Draufsicht auf eine dritte Ausführungsform einer erfindungsgemäßen Trägerkonsole, einteilig als Querträger, oder mit zwei sich über die gesamte Cockpitbreite erstreckenden Trägerfortsätzen, und
- Fig. 5: schematisch eine perspektivische Darstellung eines Teils der Trägerkonsole nach Fig. 4, aus der die Anordnung einer Airbageinheit erkennbar ist.

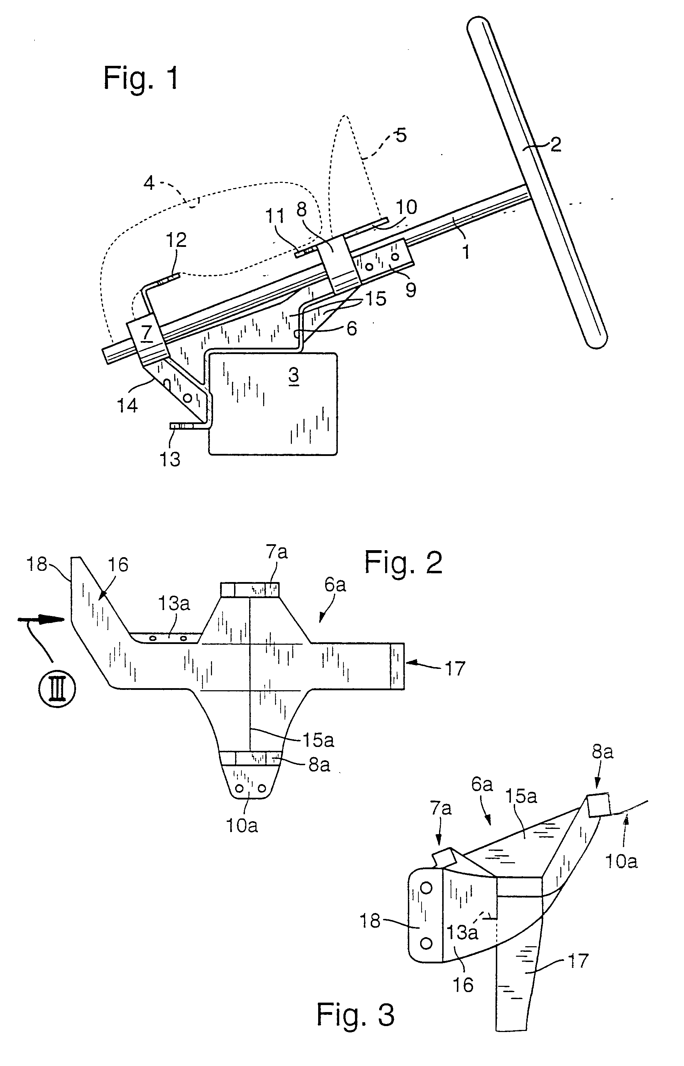

Eine Lenkungsanlage eines Kraftfahrzeugs weist gemäß Fig. 1 eine von einer nicht dargestellten Stirnwand aus in einen Fahrzeuginnenraum hineinragende Lenkwelle (1) auf, die mittels eines an ihrem freien Ende festgelegten Lenkrades (2) um eine nicht näher bezeichnete Drehachse drehbar gelagert ist. Zur drehbaren Lagerung der Lenkwelle (1) ist eine nachfolgend näher beschriebene Trägerkonsole (6) vorgesehen. Die Trägerkonsole (6) weist als Auflageabschnitt ein Auflageprofil auf, das auf einem Cockpitquerträger (3) festgelegt, insbesondere verschraubt ist. Der Cockpitquerträger (3) erstreckt sich quer zur Fahrzeuglängsachse etwa horizontal über die Breite des Fahrzeuginnenraumes und ist an seinen gegenüberliegenden Stirnenden kraftübertragend an zwei A-Säulen der Karosserietragstruktur festgelegt.

Die Trägerkonsole (6) weist zwei zueinander beabstandete und koaxial zueinander angeordnete Lagerringe (7, 8) auf, die an der Trägerkonsole (6) angeformt sind. Beim dargestellten Ausführungsbeispiel sind die Lagerringe einstückig gestaltet. Bei einem nicht dargestellten Ausführungsbeispiel der'Erfindung sind die Lagerringe aus jeweils zwei Halbschalen aufgebaut, wobei jeweils eine Halbschale einstückig mit der Trägerkonsole verbunden ist und die andere Halbschale lösbar auf die mit der Trägerkonsole verbundene Halbschale aufsetzbar ist. Die Lagerringe (7 und 8) stellen Lagersitze für Kugel- oder Gleitlager dar, die zur drehbaren Lagerung der Lenkwelle (1) vorgesehen sind. Diese Kugel- oder Gleitlager sind somit innerhalb der Lagerringe (7 und 8) integriert oder an der Lenksäule vormontiert.

Durch die Auflage der Trägerkonsole (6) auf dem Cockpitquerträger (3) weist die Trägerkonsole (6) eine Stützfunktion für einen oberhalb der Trägerkonsole (6) angeordneten Cockpitbereich (4) auf. Zur Halterung dieses Cockpitbereiches (4) sind Befestigungsflansche (11 und 12) an den beiden Lagerringen (7 und 8) einstückig angeformt. An dem zum Fahrzeuginnenraum hin gewandten Lagerring (8) ist zusätzlich ein weiterer Aufnahmeabschnitt in Form eines Auflageflansches (10) vorgesehen, auf dem ein Instrumentenmodul (5) festlegbar ist. Das Instrumentenmodul (5) stellt eine Kombination mehrerer Fahrzeugfunktionseinrichtungen in Form verschiedener Anzeigegeräte dar, die vom Fahrersitz aus erkennbar sind. Als weiterer Aufnahmeabschnitt ist unterhalb des Auflageflansches (10) ein Anschlußflansch (9) für verschiedene Bedienelemente von Fahrzeugfunktionen vorgesehen. Der Anschlußflansch (9) ist insbesondere für die Halterung eines Zündschlosses oder die Anordnung eines Scheibenwischer- oder eines Blinkhebels vorgesehen.

Die Trägerkonsole (6) ist mit mehreren Versteifungsrippen (15) zur Erhöhung der Stabilität der Trägerkonsole (6) versehen. Von der die Vorderseite des Cockpitquerträgers (3) flankierenden Profilwandung der Trägerkonsole (6) aus ragt ein Halteflansch (14) nach vorne ab, der zur Anbindung der Trägerkonsole (6) an der Stirnwand der Karosserietragstruktur vorgesehen ist. Unterhalb dieses Halteflansches (14) ist ein Aufnahmeflansch (13) für die Befestigung einer zentralen Elektrikeinheit vorgesehen.

Die Trägerkonsole (6a) nach den Fig. 2 und 3 weist ebenfalls zwei Lagerringe (7a und 8a) zur Aufnahme einer Lenkwelle (1) auf, die den Lagerringen (7 und 8) entsprechen. Zur Versteifung der Trägerkonsole (6a) im Profilbereich zwischen den beiden Lagerringen (7a und 8a) ist eine bzw. sind mehrere sich längs der Drehachse der Lagerringe (7a, 8a) erstreckende Verstärkungsrippe(n) (15a) an der Trägerkonsole (6a) angeformt.

Die Trägerkonsole (6a) ist nicht auf einem Cockpitquerträger festgelegt, sondern weist selbst ein Querträgerprofil auf, das sich als Querträgerfortsatz (16) zur seitlichen A-Säule der Karosserietragstruktur hin und als nicht näher bezeichneter gegenüberliegender Querträgerfortsatz zur Fahrzeugmitte hin erstreckt. Am Stirnende des Querträgerfortsatzes (16) ist ein Befestigungsflansch (18) für die kraftübertragende Anbindung der Trägerkonsole (6a) an die A-Säule vorgesehen. In einem Bereich der Trägerkonsole (6a) zwischen dem Querträgerfortsatz (16) und dem zentralen Lagerbereich der Trägerkonsole (6a) ist ein Aufnahmeflansch (13a) für die zentrale Elektrikeinheit angeformt, der in seiner Funktion dem Aufnahmeflansch (13) nach Fig. 1 entspricht. An dem freien Stirnende des gegenüberliegenden, zur Fahrzeugmitte hin abragenden Querträgerfortsatzes der Trägerkonsole (6a) ist ein etwa vertikal nach unten abragender Anbindungssteg (17) (Fig. 3) vorgesehen, der die Trägerkonsole (6a) stabil mit einem Fahrzeugboden oder mit einem Mitteltunnel der Fahrgastzelle verbindet. Ein Aufnahmeflansch (10a) entspricht in seiner Funktion dem Aufnahmeflansch (10) nach Fig. 1 und ist zur Befestigung eines Instrumentenmodules (5) vorgesehen. Eine weitere Verbindung zur rechten A-Säule ist ebenso denkbar durch ein zu verbindendes weiteres Querträgerelement.

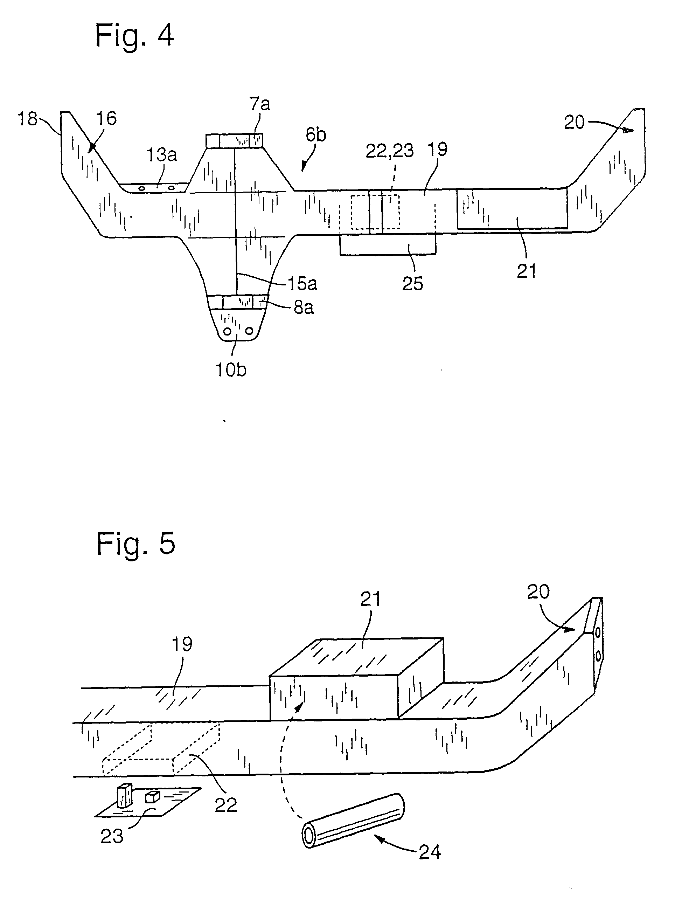

Die Trägerkonsole (6b) nach den Fig. 4 und 5 ist in ihrer Funktionsvielfalt gegenüber den zuvor beschriebenen Trägerkonsolen (6, 6a) erweitert. Von dem in der Zeichnung linken Querträgerfortsatz (16) bis in den zentralen Lagerbereich der Trägerkonsole (6b) mit den Lagerringen (7a und 8a) sowie der Verstärkungsrippe (15a) entspricht die Trägerkonsole (6b) der zuvor beschriebenen Trägerkonsole (6a) nach Fig. 2. Zu dem dem Querträgerfortsatz (16) gegenüberliegenden Ende ist die Trägerkonsole (6b) jedoch mittels eines Querträgerfortsatzes (19) fortgeführt, der sich über die gesamte übrige Breite des Fahrzeuginnenraumes erstreckt und mittels eines Anbindungsflansches (20) an der gegenüberliegenden A-Säule der Karosserietragstruktur festlegbar ist. Die Querträgerfortsätze (16 und 19) sind als Hohlprofile gestaltet und weisen eine hohe Deformationssteifigkeit auf. In einer weiteren Ausführung kann ein offenes, torsionssteifes Profil, z.B. ein H-Profil oder ein U-Profil, auch zusätzlich verrippt, Verwendung finden. Die Querträgerfortsätze (16 u. 19) können auch aus einem ganzen Teil, ohne mittige Trennstelle bestehen. Auf Höhe eines Beifahrersitzes ist an dem Querträgerfortsatz (19) der Trägerkonsole (6b) ein Aufnahmegehäuse (21) für einen Gasgenerator sowie einen zusammengefalteten Luftsack einer Airbag-Einheit (24) vorgesehen. Das Aufnahmegehäuse (21) ist zur Rückseite, d.h. zur Stirnwand hin, geschlossen und zum Fahrzeuginnenraum hin offen. Zur Fahrzeugmitte hin neben dem Aufnahmegehäuse (21) ist ein weiteres Aufnahmegehäuse (22) in dem Querträgerfortsatz (19) integriert, das zur Aufnahme einer elektronischen Sensoreinheit (23) zur Steuerung der Airbag-Einheit (24) dient. Unterhalb des Aufnahmegehäuses (22) für die Sensoreinheit (23) ist in Fig. 4 noch eine Mittelkonsole (25) dargestellt, die an dem Querträgerfortsatz (19) befestigt werden kann. Bei einem weiteren erfindungsgemäßen Ausführungsbeispiel ist auch diese Mittelkonsole (25) einschließlich entsprechender Aufnahmebereiche für Fahrzeugbedieneinheiten in dem Querträgerfortsatz (19) und damit in der Trägerkonsole (6b) integriert, so daß sich eine zentrale Cockpitkonsole für alle wesentlichen Funktionseinrichtungen des Cockpitbereiches ergibt.

Alle dargestellten Trägerkonsolen sind aus Metall entweder in einem Gußverfahren oder in einem Schmiedeverfahren oder als Blechkonstruktion hergestellt. Außerdem kann auch verstärkter Kunststoff Verwendung finden.

## Patentansprüche

1. Traganordnung für eine Lenkwelle (1) eines Kraftfahrzeugs, die in einem Cockpitbereich (4) angeordnet ist, mit einer Trägerkonsole (6, 6a, 6b), die wenigstens eine Lagerstelle (7,8) zur drehbaren Lagerung der Lenkwelle (1) sowie wenigstens einen Anbindungsbereich zur Festlegung der Trägerkonsole (6, 6a, 6b) an einem Tragteil der Karosserietragstruktur aufweist, wobei als Lagerung für die Lenkwelle (1) zwei zueinander beabstandete und koaxial ausgerichtete Lagerringe (7, 7a, 8, 8a) an der Trägerkonsole (6, 6a, 6b) vorgesehen sind,
**dadurch gekennzeichnet,**
daß die Trägerkonsole (6, 6a, 6b) einen Auflageabschnitt für die Verbindung mit einem Cockpitquerträger (3) aufweist, und daß wenigstens ein Aufnahmeabschnitt (9, 10, 13, 10a, 13a, 21, 22) für die Integration wenigstens eines Fahrzeugfunktionselementes (23, 24) an der Trägerkonsole (6, 6a, 6b) vorgesehen ist.

2. Traganordnung nach Anspruch 1,
**dadurch gekennzeichnet,**
daß an wenigstens einer Seite der Trägerkonsole (6a, 6b) ein deformationssteifer Querträgerfortsatz (16, 19) angeformt ist, dessen freies Stirnende an einer Karosseriesäule, insbesondere einer A-Säule, der Karosserietragstruktur festlegbar ist.

3. Traganordnung nach Anspruch 2,
**dadurch gekennzeichnet,**
daß die Trägerkonsole (6b) mindestens einen, zu gegenüberliegenden Seiten abragenden und an den gegenüberliegenden A-Säulen der Karosserietragstruktur befestigbaren Querträgerfortsatz (16, 19) aufweist.

4. Traganordnung nach wenigstens einem der vorhergehenden Ansprüche,
**dadurch gekennzeichnet,**
daß wenigstens ein Ablagefach für den Fahrzeuginnenraum in der Trägerkonsole (6, 6a, 6b) integriert ist.

5. Traganordnung nach wenigstens einem der vorhergehenden Ansprüche,
**dadurch gekennzeichnet,**
daß an einem Querträgerfortsatz (19) wenigstens ein Aufnahmegehäuse (21, 22) für die Aufnahme einer Airbag-Einheit(24) vorgesehen ist.

6. Traganordnung nach wenigstens einem der vorhergehenden Ansprüche,
**dadurch gekennzeichnet,**
daß an einem Querträgerfortsatz (19) ein Aufnahmegehäuse (22) als Aufnahme für eine elektronische Sensoreinheit (23) zur Steuerung einer Airbag-Einheit (24) vorgesehen ist.

## Claims

1. Mounting system for a steering shaft (1) disposed in a cockpit region (4) of a motor vehicle, having a mounting bracket (6, 6a, 6b) with at least one mounting point (7, 8) for rotatably mounting the steering shaft (1) and at least one connecting region to secure the mounting bracket (6, 6a, 6b) to a bearing part of the bodywork structure, two coaxially disposed mounting rings (7, 7a, 8, 8a) being provided at a distance apart on the mounting bracket (6, 6a, 6b) as a bearing for the steering shaft (1),
**characterised in that**
the mounting bracket (6, 6a, 6b) has a bearing section for connecting to a cockpit cross member (3) and at least one mounting section (9, 10, 13, 10a, 13a, 21, 22) is provided for integrating at least one vehicle function unit (23, 24) in the mounting bracket (6, 6a, 6b).

2. Mounting system as claimed in claim 1,
**characterised in that**
a deformation-resistant cross member projection (16, 19) is formed on at least one side of the mounting bracket (6a, 6b), the free front end of which can be secured to a bodywork pillar, in particular an A-pillar, of the bodywork structure.

3. Mounting system as claimed in claim 2,
**characterised in that**
the mounting bracket (6b) has at least one cross member projection (16, 19) projecting out from opposing faces which can be fixed to the oppositely lying A-pillars of the bodywork structure.

4. Mounting system as claimed in at least one of the preceding claims,
**characterised in that**
at least one storage compartment for the vehicle interior is integrated in the mounting bracket (6, 6a, 6b).

5. Mounting system as claimed in at least one of the preceding claims,
**characterised in that**
at least one housing compartment (21, 22) for receiving an airbag unit (24) is provided on a cross member projection (19).

6. Mounting system as claimed in at least one of the preceding claims,
**characterised in that**
a housing compartment (22) is provided on a cross member projection (19) to receive an electronic sensor unit (23) for controlling an airbag unit (24).

## Revendications

1. Dispositif support pour un arbre de colonne de direction (1) d'un véhicule automobile, disposé dans une zone de cockpit (4), avec une console support (6, 6a, 6b), présentant au moins un point de tourillonnement (7, 8) pour le montage à rotation d'arbre de direction (1) ainsi qu'au moins une zone de liaison pour assurer la fixation de la console support (6, 6a, 6b) sur une partie porteuse de la structure porteuse de carrosserie, deux bagues de palier (7, 7a, 8, 8a), espacées l'une de l'autre et orientées coaxialement, étant prévues sur la console support (6, 6a, 6b) pour servir de palier de rotation à l'arbre de direction (1),
caractérisé en ce que la console support (6, 6a, 6b) présente un tronçon de pose pour la liaison à une traverse de cockpit (3), et en ce qu'au moins un tronçon de support (9, 10, 13, 10a, 13a, 21, 22) est prévu, pour l'intégration d'au moins un élément fonctionnel de véhicule (23, 24) sur la console support (6, 6a, 6b).

2. Dispositif support selon la revendication 1, caractérisé en ce qu'au moins sur un côté de la console support (6, 6a, 6b) est formé, d'un seul tenant, un prolongement de traverse (16, 19) rigide à toute déformation, dont l'extrémité frontale libre est susceptible d'être fixée sur une colonne de carrosserie, en particulier une colonne A de la structure porteuse de carrosserie.

3. Dispositif support selon la revendication 2, caractérisé en ce que la console support (6b) présente au moins un prolongement de traverse (16, 19) faisant saillie par rapport aux côtés opposés et susceptible d'être fixé sur les colonnes A opposées de la structure porteuse de carrosserie.

4. Dispositif support selon au moins l'une des revendications précédentes, caractérisé en ce qu'au moins un compartiment de dépose pour l'habitacle est intégré dans la console support (6, 6a, 6b).

5. Dispositif support selon au moins l'une des revendications précédentes, caractérisé en ce qu'au moins un boîtier de logement (21, 22) est prévu sur un prolongement de traverse (19) pour recevoir un ensemble d'airbag (24).

6. Dispositif support selon au moins l'une des revendications précédentes, caractérisé en ce qu'un boîtier de logement (22) faisant office de logement pour une unité à capteur (23) électronique, devant assurer la commande d'un ensemble d'airbag (24), est prévu sur un prolongement de traverse (19).
